# EUROPEAN PATENT APPLICATION

(11) **EP 0 756 418 A2**
(43) Date of publication of application: **29.01.1997**
(21) Application number: 96305322.8
(22) Date of filing: 19.07.1996
(51) Int. Cl.: H04N 5/235, H04N 5/238

(54) **Image pick-up and recording apparatus for high contrast object**

(30) Priority: 27.07.1995 JP 191456/95; 14.09.1995 JP 236577/95; 26.01.1996 JP 11985/96
(71) Applicant: HITACHI DENSHI KABUSHIKI KAISHA, Chiyoda-ku, Tokyo 101 (JP)
(72) Inventor: Hatae, Yasuhiko, Adachi-ku, Tokyo (JP); Soga, Kunihiro, Kodaira-shi (JP); Shimbo, Naoyuki, Urawa-shi (JP)
(74) Representative: Calderbank, Thomas Roger

(57) **Abstract**

An image pick-up and recording apparatus for an object having a large contrast difference from a high brightness area to a dark brightness area in which when an image of the object having the large contrast difference is picked up by a TV camera (12), an iris (3A) or a shutter speed is changed such that a level of a signal from an image pick-up device (4) of the camera is periodically changed without regard to an illumination of the object, and an output signal of the TV camera is periodically changed accordingly to record and reproduce the images, and only images of an appropriate level are extracted from the reproduced images for observation.

## Description

The present invention relates to an image pick-up and recording apparatus for a high contrast object, and : for example to an apparatus for automatically picking up and visual sensing of an image of a high contrast object (high contrast refers to a contrast range of several hundreds or more gray levels from a high brightness area to a dark brightness area) which cannot be ordinarily picked up by a conventional TV camera capable of picking up several hundreds of gray levels from the high brightness area to the dark brightness area, by using the conventional TV camera.

A difference between light contrast and dark contrast of an object in a natural field or under artificial illumination ranges to several tens thousands of gray levels while a contrast expression ability (hereinafter a difference of the contrasts between the high brightness area and the dark brightness area which can be picked up is referred to as a differential contrast expression ability) of the conventional TV camera is several gray levels. Accordingly, it has been commonly known to adjust an iris of an imaging lens and a read amount of image pick-up elements in accordance with the brightness of the object to accommodate the image of a required contrast range in the same image screen. It is also a common practice that, when the contrast difference of the object to be accommodated in the same image screen exceeds the contrast expression ability of the TV camera used, the contrast expression ability of the TV camera is used as it is by sacrificing the dark brightness area or the high brightness area, or both of them. When the contrast difference is extremely large, for example, when arc welding and an article to be welded are to be concurrently observed or when a contour of a car, painting color, a license number plate and a pattern of a glass of a tail light are to be concurrently observed in the night, it is not possible to pick up them by the conventional TV camera.

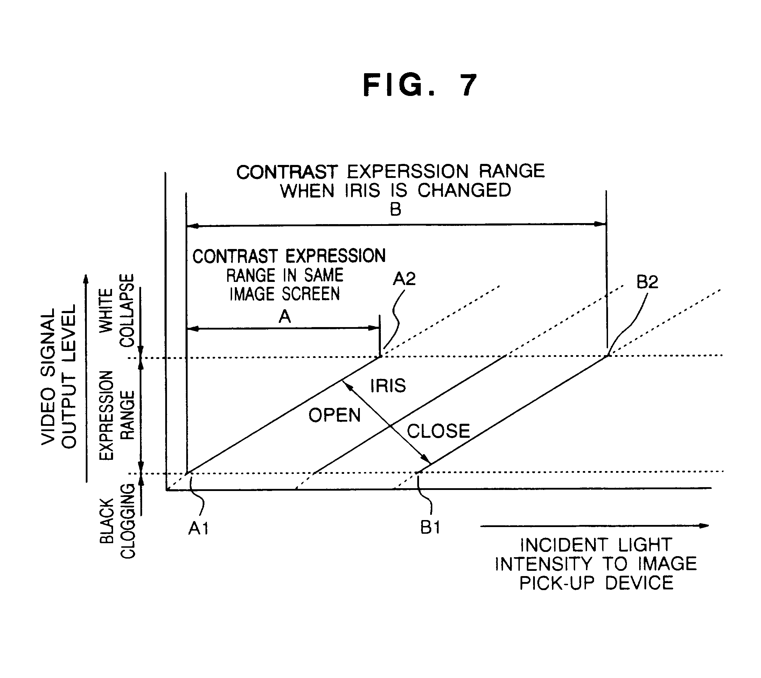

A reason therefor is explained with reference to Fig. 7. In Fig. 7, lines A1-A2 and B1-B2 indicate that an incident light intensity to the image pick-up device changes in accordance with a degree of aperture of a lens iris of the TV camera and an output level of a video signal of the TV camera increases or decreases accordingly. When it exceeds the contrast expression ability of the camera, white collapse (above a dotted line) due to the saturation of the image pick-up device and a video amplifier or black clogging (below the dotted line) due to undergoing below a setup level or a noise level takes place. In the white collapse and black clogging areas shown by broken lines, the image pick-up by the TV camera is not attainable.

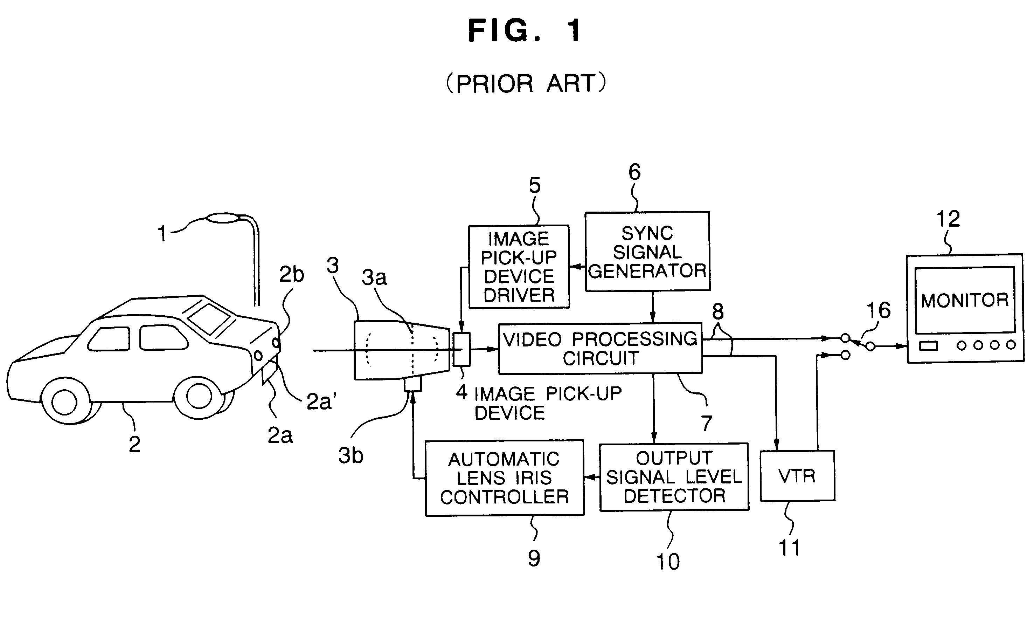

Fig. 1 shows an apparatus for monitoring vehicles passing through a crossing throughout day and night without using a special illumination in order to detect a vehicle relating to a crime by using a video image picked up by a TV camera. It shows a configuration to explain particularly a night state. In Fig. 1, an image of a car 2 illuminated by a street light 1 is focused on an image pick-up device 4 through an imaging lens 3 of the TV camera and outputted from a video processing circuit 7 as a video sync composite signal 8, which is applied to a monitor 12 through a switch 16 and observed on real time by the monitor 12. On the other hand, the output from the video processing circuit 7 is also recorded in a VTR 11. When the switch 16 is selected to select the output of the VTR 11 to reproduce the recorded signal by the VTR, the reproduced video image can be displayed on the monitor 12.

A sync signal generator 6 sends a signal read timing signal to the image pick-up device 4 through an image pick-up device driver 5 and sends a sync signal for generating a video sync composite signal to the video processing circuit 7. An iris adjusting mechanism 3b coupled to an iris 3a of the imaging lens is controlled by an automatic lens iris controller 9 such that an output signal of an output signal level detector 10 of the video processing circuit 7 is kept at a predetermined constant level so that the video sync composite signal 8 is kept at a constant level without regard to change of sunshine illumination due to change of season, change of climate and time of the day. In the night, since the illumination of the street is low, the iris of the lens is usually kept open.

When the iris 3a of the lens is opened such that the video level suitable for the visual sensing in the night of the shape and the painting color of the car is attained, the license number plate 2a and the tail light 2b are white-collapsed and the shape and the license number cannot be read. Conversely, when the iris 3a of the lens is controlled (the aperture is throttled) to allow the visual sensing of the license number plate 2a and the tail light 2b in the night, the shape and the painting color of the car are black-clogged and cannot be visually sensed.

Further, the light intensity of the license number plate significantly changes depending on the presence or absence of the illumination by a head light of a succeeding car and a distance thereof. In addition, when the succeeding car is not present, it is usually illuminated by a license number plate illumination light 2a' from the top or the bottom and hence a difference between top and bottom illumination intensities is large. For example, when it is illuminated from the top and if the lens iris is set to be optimum to visually sense the area code and car type in the upper section, the identification number and the license number in the lower section are black-clogged, and if the lens iris is set to be appropriate to visually sense the identification number and the license number in the lower section, the area code and the car type in the upper section are white-collapsed. Thus, it is difficult to visually sense the entire license number plate.

In the above description, for the sake of convenience of explanation, the iris 3a of the lens is automatically controlled by an auto-iris system. Same phenomena are observed in an auto-gain control system for controlling a gain of an amplifier of the video processing circuit 7 and an auto-electronic shutter system which automatically controls an amount of signal reading to keep an output level of the image pick-up device at a constant level. Since those systems are known per se, the explanation thereof is omitted.

It is an object of the present invention to provide an image pick-up and recording apparatus for a high contrast object which allows the pick-up of an image of a high contrast object having eg. several hundreds of gray levels as a contrast difference between a high brightness area and a dark brightness area by using a conventional TV camera.

It is a preferred aim of the present invention to provide an image pick-up and recording apparatus for a high contrast object which concurrently allows the visual sensing of a shape and a painting color of a car under a low illumination and the visual sensing of a light and a license number plate of the car under a high illumination, which are essential requirements to monitor a car in the night without using a special illumination light.

It is a preferred aim of the present invention to provide an image pick-up and recording apparatus for a high contrast object which picks up the image while periodically changing a range of contrast expression and displays an image of a predetermined signal level on a monitor.

It is a preferred aim of the present invention to provide an image pick-up and recording apparatus for a high contrast object which picks up and records a plurality of high contrast objects and alternately displays at least two types of images of a predetermined signal level on a monitor or a combined image thereof concurrently.

In order to achieve the above objects, in accordance with the present invention, the defects of the prior art in which the interested portions cannot be visually sensed by the white collapse of the high brightness area of the high contrast object or the black clogging of the dark brightness area, which could not be solved in the prior art, are resolved, and the image is picked up and recorded while changing the range of contrast expression by continuously or intermittently and periodically changing the incident light intensity or the sensitivity of the TV camera without regard to the illumination of the object.

It has been widely known that the visual sensing of the license number plate is effective to monitor the car. By picking up a plurality of signal levels in accordance with the present invention, the license number plate as well as the shape of the car, the painting color, the shape of the light and the pattern of the glass of the light can be picked up and such information is important keys to identify the car.

When the periodically changing TV camera output signal is displayed as it is on the observation device such as monitor, the change of brightness is so frequent that it is not a display screen suitable for viewing by human eye. Thus, by sending to and displaying on the observation device only the video image of a predetermined level suitable for the continuous observation from the TV camera output signal, the object can be readily recognized.

Further, images of a plurality of predetermined signal levels, for example, two signal levels are periodically extracted from the TV camera output signal and they are alternately and periodically displayed on the observation device or combined.

### In the drawings

Fig. 1 shows a configuration of a prior art image pick-up system,
Fig. 2 shows an embodiment of an auto-iris system of the present invention,
Fig. 3 shows an embodiment of an auto-electronic shutter system of the present invention,
Fig. 4 shows a diagram of an aging change of an iris value of an imaging lens when the present invention is applied to the auto-iris system,
Fig. 5 shows a diagram of an aging change of a shutter speed when the present invention is applied to the auto-electronic shutter system,
Fig. 6 shows a diagram of an aging change of a video signal output level due to a change of the shutter speed when the present invention is applied to the auto-electronic shutter system,
Fig. 7 illustrates concept of contrast expression of a TV camera due to a change of aperture of the iris of the imaging lens of the TV camera and an incident light intensity,
Figs. 8A and 8B show examples of objects picked up by using the apparatus of the present invention,
Figs. 9A and 9B show waveforms for illustrating the operation of the present invention,
Fig. 10 shows another embodiment of the present invention, and
Figs. 11A, 11B and 11C show images for illustrating other embodiment of the present invention.

Referring to Fig. 7, a principle of the present invention is explained in detail. In Fig. 7, a contrast (gradation or gray level) expression range A of a TV camera when an iris is in an "open" position is from Al to A2. Namely, an area on the left of Al is black-clogged and an area on the right of A2 is white-collapsed. On the other hand, the contrast expression range A when the iris is in a "closed" position is from B1 to B2. Namely, an area on the left of B1 is black-clogged and an area on the right of B2 is white-collapsed.

However, when the "open" and "close" of the iris are continuously or intermittently changed, the contrast expression range B of the TV camera may be from A1 to B2.

Accordingly, by constructing the TV camera in which the iris is continuously or intermittently changed from "open" to "close", the object of a wide range of contrast difference which could not be picked up by the prior art due to the black-clogging or the white collapse can be picked up and an apparatus which is extremely effective as a monitoring camera is provided.

On the other hand, the level of the video signal sent from the TV camera during the image pick-up in this system varies widely and periodically and when it is displayed on the monitor 12 as it is, the change of the intensity is so large that it does not fit to the observation by a finder. Accordingly, it is necessary to extract only the images which fit to the observation from the video signal sent from the TV camera for displaying it on the monitor 12 or temporarily storing the video signal sent from the camera in the recording apparatus displaying only the images of the predetermined level on the monitor. The present invention is now explained in detail with reference to the drawings.

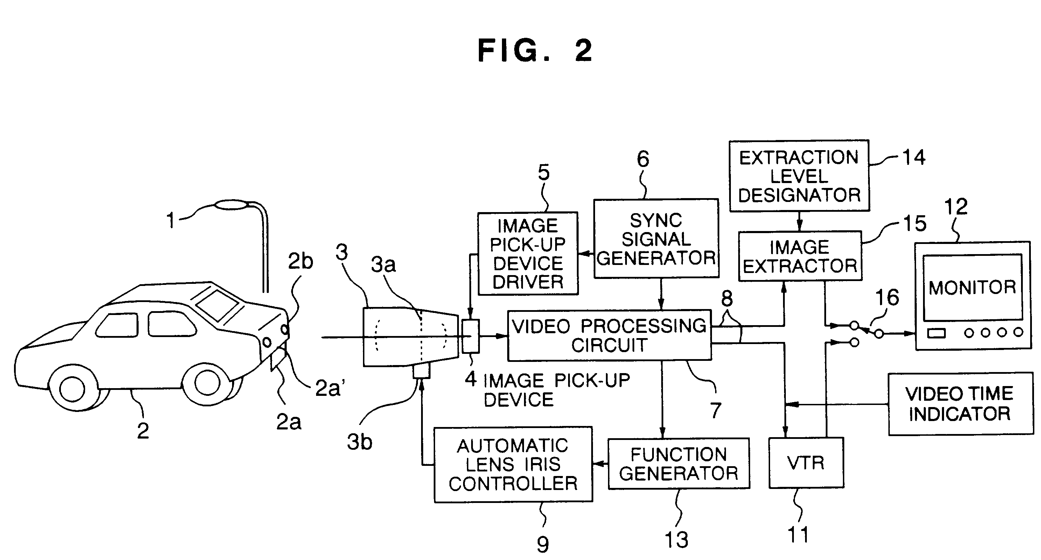

Fig. 2 shows an embodiment of the present invention in which the auto-iris system is applied. The like elements to those shown in Fig. 1 are designated by the like numerals.

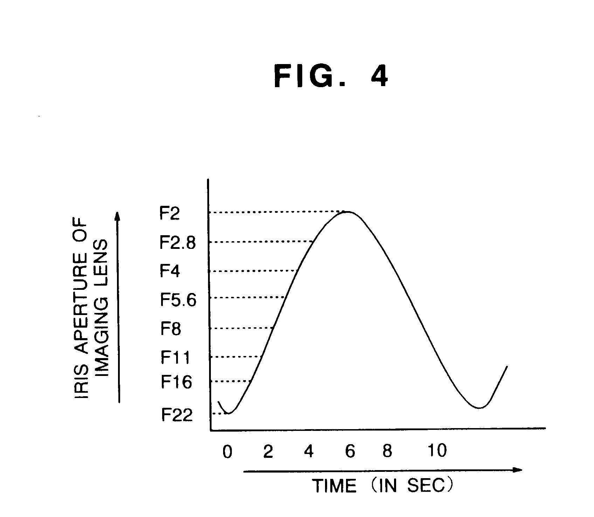

A function generator 13 in Fig. 2 generates a control signal for periodically repeating the opening and closing of the iris 3a of the imaging lens from a maximum aperture ratio (F22) to a minimum aperture ratio (F2) and sends it to an automatic lens iris controller 9. Fig. 4 shows a manner of change in time of the iris aperture of the imaging lens. In the present example, the lens aperture ration continuously changes from the maximum (F22) to the minimum (F2) in approximately six seconds. In this case, the incident light intensity to the image pick-up device 4 periodically changes by the opening and the closing of the iris and the signal level from the image pick-up device 4 also changes. As a result, as shown in Fig. 7, the contrast expression range changes. Actual iris change range and change speed are set to predetermined values depending on the setting of the camera sensitivity as well as the brightness of the object and the environment brightness. By adjusting the function generator 13, the speed of the iris change may be changed or the iris aperture may be discontinuously set to F22, F11, F5.6, ···, for example.

The video signal picked up by the TV camera in this manner is displayed on real time on the monitor 12 and also recorded by the VTR 11.

The video signal reproduced by the VTR 11 is one in which the iris of the TV camera continuously or intermittently changes from "open" to "close" so that the image of a wide range of contrast expression which could not be attained in the prior art is attained instead of the contrast of a specific expression range picked up by the conventional camera. Accordingly, the image which allows the visual sensing of the high brilliance object of the range corresponding to the white-collapse and the image which allows the visual sensing of the low brilliance (low illumination) object of the range corresponding to the black clogging can be picked up. Thus, by extracting only the images of a predetermined level from a series of reproduced images and finely observing them, the information which is extremely effective in identifying the car on the road relating to the crime can be derived.

During the image pick-up, the level of the video signal 8 sent from the TV camera of Fig. 1 changes widely and periodically and it is difficult to observe it as it is. Thus, only the images of the level which fit to the viewing by finder are designated by an extraction level designator 14 and those images are extracted by an image extractor 15 and sent to the monitor 12.

The image extractor 15 has a function of temporarily storing the image of the predetermined level and extracts and stores the first image of that level from the incoming image signal of repeatedly hanging levels and reproduces the stored image and sends it until that image of the next period is extracted. By repeating the above operation, the video image which fits for the observation as the finder is derived.

The designation by the extraction level designator 14 is commonly performed manually while watching the monitor screen but a configuration to automatically designate the video signal level may be readily implemented.

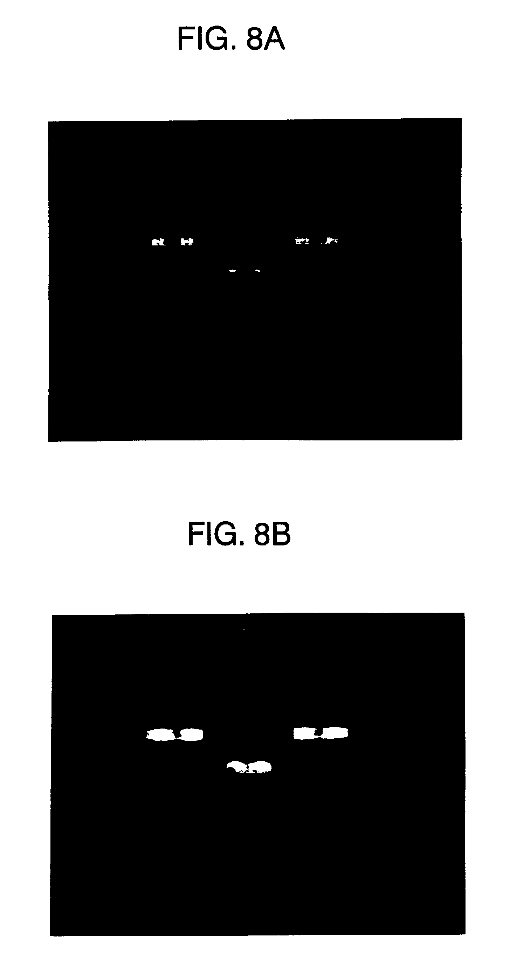

Referring to Figs. 8A and 8B, actual examples of the pick-up of the rear license number plate of a car running at a speed of 30 Km/h at a crossing in the night by the apparatus of the present invention without using special illumination are explained. Fig. 8A shows the example picked up at a shutter speed of 1/60 sec and an iris aperture of F4. The indication of 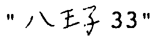 (HACHIOJI 33) in the upper section of the license number plate is recognizable but the indication in the lower section is not recognizable.

On the other hand, Fig. 8B shows the example picked up at a shutter speed of 1/60 sec and an iris aperture of F2. In this case, the indication in the upper section of the license number plate is not recognizable but the indication "59·35" in the lower section is recognizable. In this example, since the license number plate is illuminated by the illumination light from the top, the illumination at the top is high and the illumination at the bottom is low and the illumination difference between the top and the bottom is large. Left and right white areas in Fig. 8A and 8B correspond to the tail light.

By periodically changing the iris aperture, the entire characters on the license number plate which cannot be fully recognized with a fixed iris can be read.

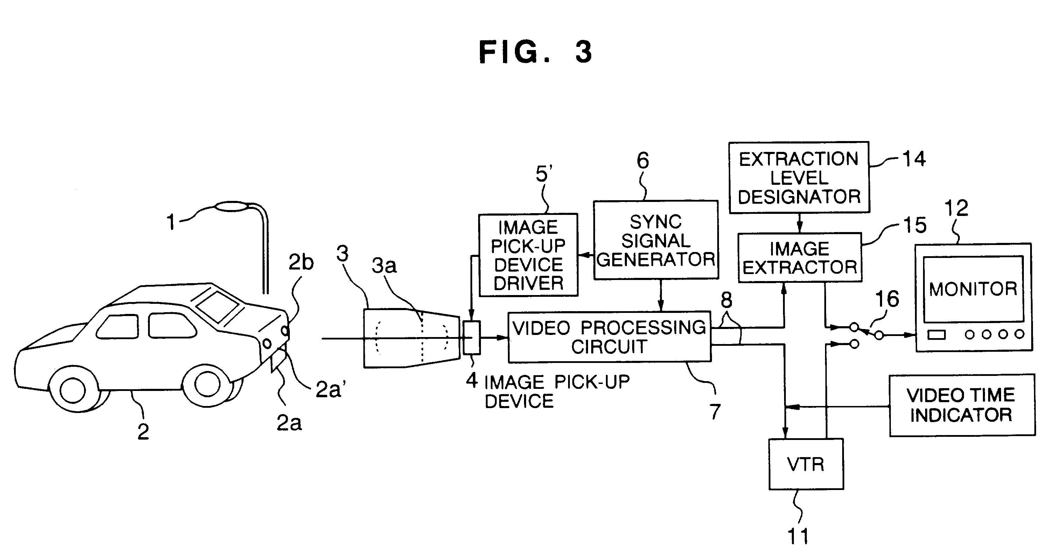

Fig. 3 shows another embodiment of the present invention in which the electronic shutter system to control the amount of signal reading of the image pick-up device 4 is controlled while the iris 3a of the imaging lens is kept constant is applied. The like elements to those of Fig. 1 are designated by the like numerals.

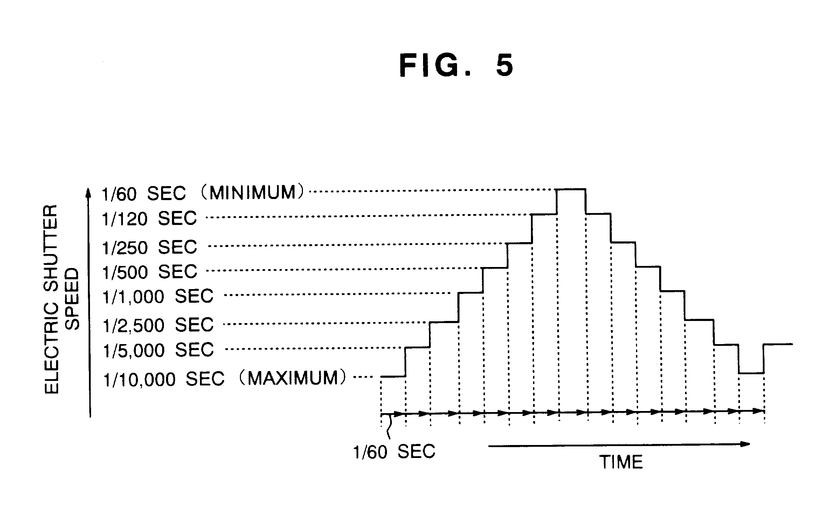

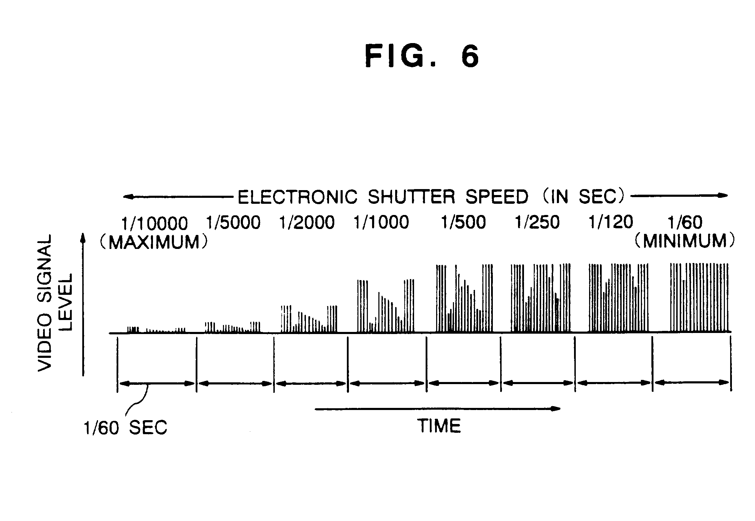

An image pick-up device driver 5' of Fig. 3 is constructed to send a signal read timing signal which causes the shutter operation of different speed for each field or every certain number of fields of the picked-up image to the image pick-up device 4, for example, a two-dimension CCD device. The electronic shutter speed used in the present embodiment changes with time as shown in Fig. 5. Namely, the shutter speed periodically changes from 1/10,000 sec (maximum speed) to 1/60 sec (minimum speed) at a pitch of 1/60 sec. Accordingly, the video level of the video signal derived from the image pick-up device 4 changes from the minimum level (maximum shutter speed) to the maximum level (minimum shutter speed) as shown in Fig. 6 and the entire video image shown in Fig. 6 is recorded in the recording apparatus 11, for example, a VTR. In this manner, the image which allows the visual sensing of the high brilliance object of the range corresponding to the white collapse and the image which allows the visual sensing of the low brilliance (low illumination) object of the range corresponding to the black clogging can be picked up and the information necessary to identify the car can be derived, as they are in the case of Fig. 2. The function of extracting only the images of the level which fit to the finder and sending them to the monitor 12 is same as that in Fig. 2.

For the sake of convenience of the explanation, the electronic shutter speed in Fig. 5 has eight steps from 1/10,000 sec (maximum speed) to 1/60 sec (minimum speed) at the pitch of 1/60 sec although actual change range, the number of steps and changer pitch may be appropriately set in accordance with the application.

The embodiment of Fig. 2 is effective for an object of relatively slow change speed such as a pedestrian because approximately six seconds are required for the change from F22 to F2. For an object of a relatively high change speed such as a running car, there is a risk that the object goes beyond a view field. In this case, an embodiment shown in Fig. 3 in which the sensitivity changes for each field is appropriate.

Other system for changing the incident light intensity to the image pick-up device 4 such as changing in time a light attenuation factor of an ND filter inserted in an optical path while keeping the iris 3a of the imaging lens at a constant aperture or changing in time the illumination of the illumination device while keeping the iris 3a of the imaging lens at a constant aperture is also within the scope of the present invention.

In the above embodiments, one of the irs and the shutter speed is changed and the other is kept constant. Alternatively, both may be changed to pick up an object of a wider range of contrast difference. While the image recorded in the VTR is visually recognized in the above embodiments, the use of a disk recorder or a semiconductor memory as a recording medium and the automatic recognition by an image processing such as pattern recognition are also within the scope of the present invention.

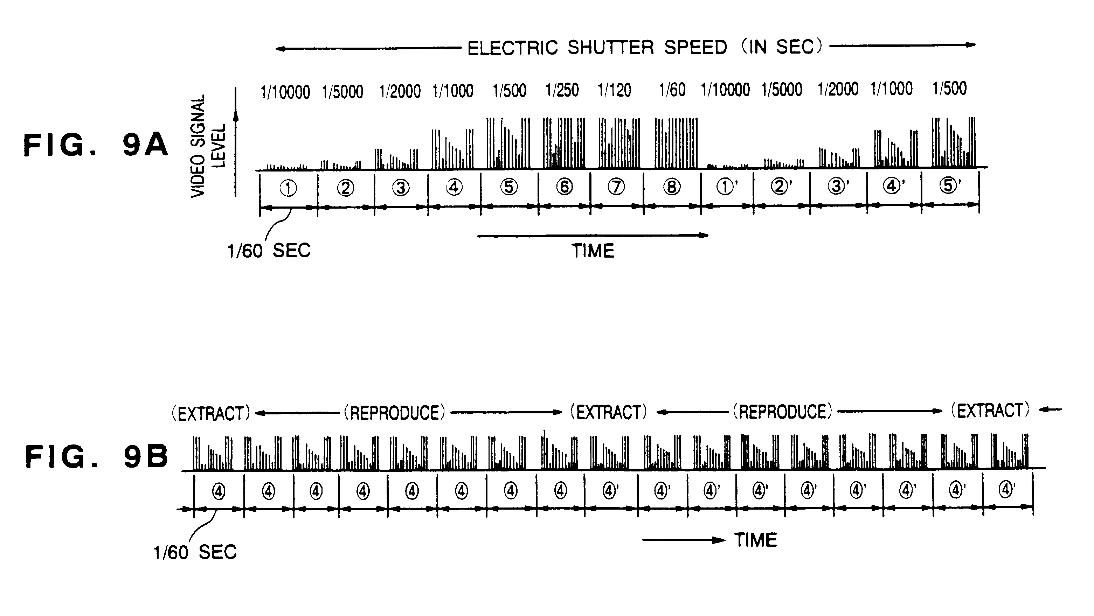

An operation to extract and display only the images of a level which fits to the observation is now explained with reference to the drawings. Fig. 9A shows a waveform of a video signal picked up with an 8-field period while the electronic shutter speed is changed for each field, and Fig. 9B shows a waveform when video images ④, ④', ··· of the shutter speed 1/1000 are extracted from the waveform of Fig. 9A, they are temporarily recorded in the recording apparatus and the extracted video images are reproduced at an interval of 1/60 sec. Thus, the same image is displayed for 8/60 sec. Accordingly, the image is updated at the interval of 8/60 sec. Therefore, the image optimum to observe the state can be extracted and displayed.

In the above embodiment, only the images of the level which fits to the observation are extracted from the video signal 8 picked up by the TV camera. The present invention is also applicable when the image is reproduced from the recording apparatus such as the VTR 11 which recorded the video signal and it is displayed on the monitor 12.

By using a video time indicator to superimpose or insert an image pick-up time from the indicator on the video signal of the TV camera, it is effective in identifying the image of high interest by subsequently reproducing the recorded image.

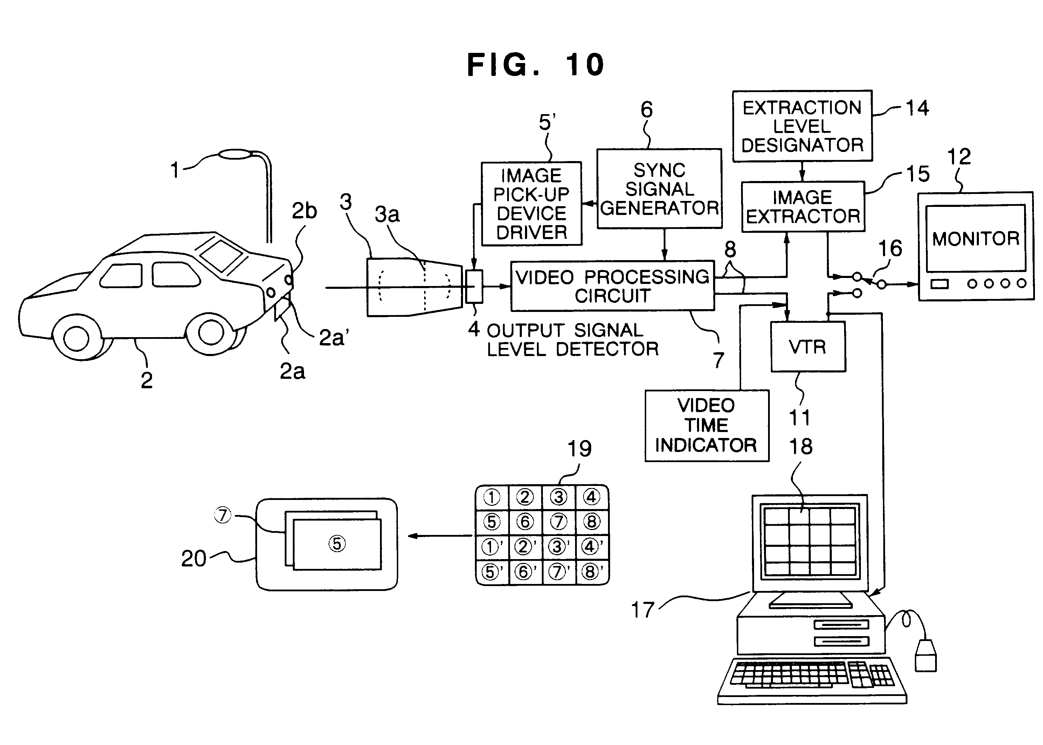

An embodiment to identify the image of high interest by reproducing the image recorded in the recording apparatus is shown in Fig. 10. The reproduced image from the recording apparatus 11 is inputted to a display personal computer 17. Two periods of images in which the video signal levels of ① ∼ ⑧, ①' ∼ ⑧' corresponding to the waveforms shown in Fig. 9A are displayed in the sequence of time elapse on a display screen 10 of the personal computer 17. The image which fits to the visual sensing of the license number plate is designated and extracted from the displayed images by a keyboard of the personal computer 17 and it is displayed in enlargement as shown in a display screen 20. The contrast correction of the image or the superposition of the images ⑤ and ⑦ may be performed as required to attain more accurate observation.

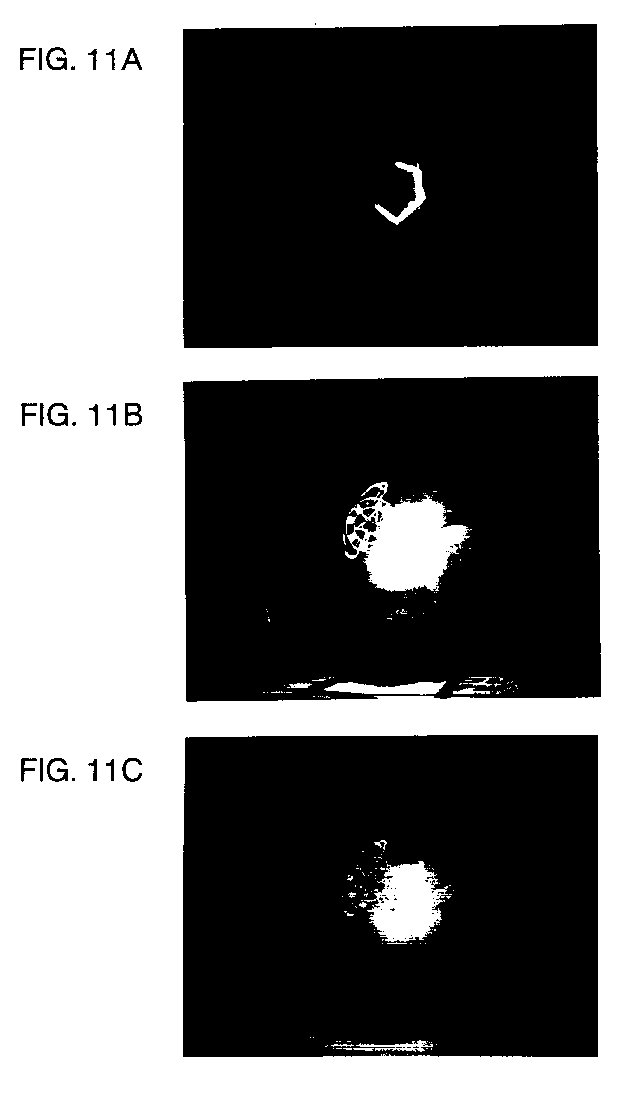

Figs. 11A, 11B and 11C show other embodiment of the present invention. The present embodiment allows the accurate observation of the object of high contrast difference which could not be accurately observed by the prior art by the superposition of the images. Namely, the present embodiment shows a screen of the monitor 12 when an incandescent lamp is picked up by using the apparatus of Fig. 10.

The images picked up while the shutter speed is continuously changed by the image pick-up device driver 5' from 1/10,000 sec to 1/60 sec at the pitch of 1/60 sec are recorded in the recording apparatus 11 and displayed on the observation personal computer 17.

In this case, Fig. 11A shows that with the lens iris of F4 and the shutter speed of 1/10,000 sec, the bulb and the equipment of the lamp do not appear in the video image but only the filament image clearly appears.

Fig. 11B shows the image picked up with the shutter speed of 1/2500 sec (the lens iris is fixed to F4). The filament is collapsed and does not appear in the image but the bulb and the equipment of the lamp clearly appear.

Accordingly, by the designation by the image extractor 15, the images of 1/10,000 sec and 1/250 sec, of the images recorded in the recording apparatus 11 are taken out and they are alternately displayed on the monitor 12 at the interval of 1/60 sec so that the filament as well as the bulb and the equipment of the lamp can be viewed concurrently on the same image screen as shown in Fig. 11C. Instead of alternately displaying the video images, the two video images may be electronically combined by using the personal computer for display.

While the necessary images are selected by the observing personal computer in the above embodiment, they may be automatically extracted by the extract level designator 14 depending on the type of object.

The embodiments of the present invention described above are very effective in the image pick-up of the object in which a very high brightness area and a very dark brightness area coexist, such as monitoring of arc welding, monitoring of dust furnace, monitoring of heat rolling and photographing with back-light.

While the shutter speeds of 1/10.000 sec to 1/60 sec are sequentially changed in the above embodiments, too high shutter speed or too low shutter speed may be unnecessary depending on the movement or the brilliance of the object. For example, when a light object is picked up, a residual image may occur when it is picked up at 1/60 sec. Therefor, the shutter speed of 1/60 sec is eliminated in this case. When a dark object is picked up, the shutter speeds from 1/2,000 sec to 1/10,000 sec are too fast and they are eliminated.

Accordingly, in such a case, the shutter speed may be specified to a required range such as 1/100 sec to 1/1,000 sec and the shutter speeds in the specified range may be sequentially changed to attain the desired object. In this case, a cycle time of the pick-up may be shortened. Further, unnecessary images are not taken and the memory capacity of the recording apparatus can be efficiently utilized. A construction therefor may be readily implemented by setting the change range of the image pick-up device driver 5' shown in Fig. 3 to a specific range.

While the shutter speed has been discussed above, it should be understood that the lens iris apertures may be sequentially changed in a specific range. A construction therefor may be implemented by setting the automatic lens iris controller 9 shown in Fig. 2 to a specific range.

The shutter speed or the lens iris may be sequentially changed or discontinuously changed, for example, the repetitive change in the order of F16. F8, F4 and F2 in Fig. 4 or the repetitive change in t he order of 1/5,000 sec, 1/1,000 sec and 1/250 sec.

In accordance with the present invention, the video image which allows the visual recognition of the object of high contrast is attained with the apparatus of the relatively simple construction and it greatly contributes to the investigation of crime. Further, the observation of the object in which the high brilliance area and the low brilliance area coexist is greatly facilitated. In addition, the image pick-up device used in the present invention operate equally whether it is for black and white or for color.

## Claims

1. An image pick-up and recording apparatus for an object having a large contrast difference comprising:
a TV camera (3, 4) having image pick-up means (4) for picking up an image of an object having a large contrast difference from a high brightness area to a dark brightness area;
a video processing circuit (7) for processing a vide signal outputted from said image pick-up means (4);
a recording unit (11) for recording the output from said video processing circuit (7); and means (3a, 3b, 5', 6, 9, 13) for periodically changing, in time, a level of the signal outputted from said image pick-up means (4).

2. An image pick-up and recording apparatus for an object having a large contrast difference according to Claim 1 wherein said means for periodically changing, in time, the level of the signal outputted from said image pick-up means (4) includes iris drive means (3b) for driving an iris of an imaging lens (3) of said TV camera and control means (9, 13) for controlling said drive means (3b), and said control means includes means for generating a signal for periodically and repetitively opening and closing said iris in time.

3. An image pick-up and recording apparatus for an object having a large contrast difference according to Claim 1 wherein said means for periodically changing, in time, the level of the signal outputted from said image pick-up means (4) includes means (5') for reading a signal from said image pick-up means (4) and means (6) for generating a timing signal to be applied to said signal read means, and said timing signal causes periodic change in the signal read speed from said image pick-up means.

4. An image pick-up and recording apparatus for an object having a large contrast difference according to Claim 3 wherein said timing signal causes the periodic change in the signal read speed from said image pick-up means and the signal from said image pick-up means (4) is limited to a predetermined change range.

5. An image pick-up and recording apparatus for an object having a large contrast difference according to Claim 3 wherein said image pick-up means (4) comprises a two-dimension CCD device and said means (6) for generating the timing signal generates the signal read timing signal with a shutter operation of different shutter speed for at least every field of the pick-up image.

6. An image pick-up and recording apparatus for an object having a large contrast difference according to Claim 1 further comprising:
means (12) for sequentially displaying image signals outputted from said video processing circuit (7); and
means (15) for extracting images of a predetermined level from the displayed images;
the images of the predetermined signal level being displayed by said display means.

7. An image pick-up and recording apparatus for an object having a large contrast difference according to Claim 6 further comprising:
means (11) for recording the extracted images of the predetermined signal level;
wherein the images recorded in said recording unit are repeatedly reproduced and displayed on said display means (12) until the next extracted image is derived.

8. An image pick-up and recording apparatus for an object having a large contrast difference comprising:
a TV camera (3, 4) having image pick-up means (4) for picking up an image of an object having a large contrast difference from a high brightness area to a dark brightness area;
a video processing circuit (7) for processing a vide signal outputted from said image pick-up means;
a recording unit (11) for recording the output from said video processing circuit;
means (3a, 3b, 4, 5', 6, 9, 13) for periodically changing, in time, a level of the signal outputted from said image pick-up means;
means (14, 15) for reproducing the video signal recorded in said recording unit, extracting only images of a predetermined level suitable for predetermined observation in the reproduced video signal and storing the extracted images in memory means; and
display means (12);
wherein the recorded images are repeatedly reproduced and displayed until next extracted image is derived.

9. An image pick-up and recording apparatus for an object having a large contrast difference according to Claim 8 further comprising:
a video time indicator,
whereby an image pick-up time from said video time indicator is inserted in the picked-up image of the object.

10. An image pick-up and recording apparatus for an object having a large contrast difference according to Claim 8 further comprising means (14, 15) for extracting at least two different video signals of a predetermined level from the video signal recorded in said recording unit;
wherein the extracted video signals are alternately displayed on said display means.

11. An image pick-up and recording apparatus for an object having a large contrast difference according to Claim 8 further comprising means (14, 15) for extracting at least two different video signals of a predetermined level from the video signal recorded in said recording unit;
wherein the extracted video signals are displayed in superposition on said display means.
